# EUROPÄISCHE PATENTSCHRIFT

(11) **EP 3 107 779 B1**
(45) Veröffentlichungstag und Bekanntmachung des Hinweises auf die Patenterteilung: **10.04.2019**
(21) Anmeldenummer: 15705967.6
(22) Anmeldetag: 17.02.2015
(51) Int. Cl.: B60T 13/74

(54) **KRAFTFAHRZEUGBREMSE, INSBESONDERE KOMBINIERT HYDRAULISCH UND ELEKTROMECHANISCH BETÄTIGBARE KRAFTFAHRZEUGBREMSE, MIT MEHRSTUFIGER SPINDEL**
MOTOR VEHICLE BRAKE, IN PARTICULAR A MOTOR VEHICLE BRAKE THAT CAN BE ACTUATED IN A COMBINED HYDRAULIC AND ELECTROMECHANICAL MANNER, COMPRISING A MULTI-STAGE SPINDLE
FREIN DE VÉHICULE AUTOMOBILE, EN PARTICULIER FREIN DE VÉHICULE AUTOMOBILE ACTIONNABLE HYDRAULIQUEMENT ET ÉLECTROMÉCANIQUEMENT DE MANIÈRE COMBINÉE, AVEC BROCHE À PLUSIEURS ÉTAGES

(30) Priorität: 19.02.2014 DE 102014002484
(43) Veröffentlichungstag der Anmeldung: 28.12.2016
(73) Patentinhaber: Lucas Automotive GmbH, 56070 Koblenz (DE)
(72) Erfinder: OHLIG, Benedikt, 56179 Vallendar (DE); MICHELS, Erwin, 56829 Kail (DE)
(74) Vertreter: Schmidt, Steffen J.
(86) Internationale Anmeldenummer: PCT/EP2015/053253
(87) Internationale Veröffentlichungsnummer: WO 2015/124545

(56) Entgegenhaltungen:
- DE-A1- 3 220 283
- DE-A1- 19 913 939
- DE-A1-102005 036 863

## Beschreibung

Die vorliegende Erfindung betrifft eine Kraftfahrzeugbremse, insbesondere eine kombiniert hydraulisch und elektromechanisch betätigbare Kraftfahrzeugbremse, mit einer Aktuatorbaugruppe umfassend: ein Gehäuse , ein relativ zu dem Gehäuse entlang einer Längsachse verlagerbares Stellglied zum hydraulischen oder elektromechanischen Verlagern eines Bremsbelags, einen motorischen Antrieb, und eine zwischen dem motorischen Antrieb und dem verlagerbaren Stellglied angeordnete Verlagerungsmechanik zum Verlagern des Stellglieds.

Derartige Kraftfahrzeugbremsen sind bereits aus dem Stand der Technik bekannt.

So beschreibt das Dokument WO 2008/037738 A1 eine sowohl hydraulisch als auch elektromechanisch betätigbare Kraftfahrzeugbremse. In einer Normalbetriebssituation, das heißt während der Fahrt des Kraftfahrzeugs, wird diese Kraftfahrzeugbremse in üblicher Weise hydraulisch betätigt. Zur Aktivierung einer Feststellbremse wird die elektromechanische Betätigungsfunktion aktiviert. Dabei wird ein Elektromotor angesteuert, der über eine Verlagerungsmechanik mit einer Getriebeanordnung eine Spindel-Mutter-Anordnung antreibt. Die Getriebeanordnung ist mit einem Schneckenradgetriebe selbsthemmend ausgebildet, um zu verhindern, dass sich bei aktivierter Feststellbremse die Feststellbremswirkung reduziert. Die Besonderheit der in diesem Stand der Technik beschriebenen Kraftfahrzeugbremse liegt in der Ausgestaltung der Spindel-Mutter-Anordnung, in der die Wälzkörper nicht umlaufen sondern über eine Feder vorgespannt sind. Ein Nachteil dieser Kraftfahrzeugbremse besteht darin, dass bei einer elektromechanischen Betätigung ein relativ großer Betätigungsweg überwunden werden muss, was einen erheblichen Zeitraum in Anspruch nehmen kann, bis die gewünschte Zuspannwirkung mit der gewünschten Bremskraft erreicht ist. Darüber hinaus ist dieser Aufbau verhältnismäßig aufwändig.

Auch das Dokument WO 2009/046899 A1 beschreibt eine Kraftfahrzeugbremse, die elektromechanisch betätigbar ist. Die elektromechanische Betätigung erfolgt aber sowohl zur Aktivierung der Betriebsbremsfunktion als auch zur Aktivierung der Feststellbremsfunktion. Aus diesem Grund ist die Getriebeanordnung selbsthemmungsfrei ausgebildet. Diese Kraftfahrzeugbremse hat den Vorteil, dass für ihre Ansteuerung kein Hydrauliksystem erforderlich ist, sondern dass stattdessen die Bordelektronik des Fahrzeugs verwendet werden kann, um das Bremssystem anzusteuern. Da die Getriebeanordnung selbsthemmungsfrei ausgebildet ist, ist zum Blockieren der Kraftfahrzeugbremse für die Feststellbremsfunktion eine gesonderte Blockiereinrichtung vorgesehen, bei der ein Hebel magnetisch in eine Blockierstellung gebracht werden kann. Auch bei diesem Stand der Technik ist vorgesehen, eine Spannkraftreserve zum Ausgleich von Setzvorgängen an den Bremsbelägen in Folge eines Abkühlens oder dergleichen nach Zustellen der Bremse im Feststellbremsbetrieb bereitzustellen. Wiederum hat diese Kraftfahrzeugbremse den Nachteil, dass ein erheblicher Zeitraum verstreichen kann, bis die gewünschte Zuspannwirkung erreicht ist.

Des Weiteren offenbart das Dokument DE 10 2005 036 863 A1 eine Fahrzeugbremse mit einem Gehäuse, einem verlagerbaren Bremsbelag und einem Aktuator zum Verlagern des Bremsbelags. Der Aktuator weist dabei eine Getriebeanordnung auf, die zwei Getriebestufen umfasst, die je nach Maßgabe eines Betriebszustands der Fahrzeugbremse unterschiedliche Getriebeübersetzungen vorsehen.

Es ist Aufgabe der vorliegenden Erfindung, eine kombiniert hydraulisch und elektromechanisch betätigbare Kraftfahrzeugbremse bereitzustellen, die sich sowohl als Betriebsbremse als auch als Feststellbremse nutzen lässt und die bei einfachem Aufbau und auch unter Verwendung eines verhältnismäßig leistungsschwachen elektromotorischen Antriebs eine Verkürzung des Zeitraums bis zum Erreichen der gewünschten Zuspannwirkung ermöglicht.

Diese Aufgabe wird durch eine Kraftfahrzeugbremse der eingangs bezeichneten Art gelöst, bei der vorgesehen ist, dass die Verlagerungsmechanik eine mehrstufige Spindel-Mutter-Anordnung mit einer ersten Spindel-Mutter-Paarung mit einer ersten Gewindesteigung und einer zweiten Spindel-Mutter-Paarung mit einer zweiten Gewindesteigung aufweist, wobei die erste Gewindesteigung größer ist als die zweite Gewindesteigung, wobei bei einer elektromechanischen Betätigung der Kraftfahrzeugbremse in einer ersten Betätigungsphase die erste Spindel-Mutter-Paarung wirksam ist und in einer zweiten Betätigungsphase die zweite Spindel-Mutter-Paarung wirksam ist.

Die vorliegende Erfindung sieht vor, eine mehrstufige Spindel-Mutter-Anordnung bereitzustellen, die eine erste Spindel-Mutter-Paarung und eine zweite Spindel-Mutter-Paarung aufweist, wobei deren Gewindesteigungen unterschiedlich groß sind. In einer Betätigungsphase der elektromechanischen Betätigung der erfindungsgemäßen Kraftfahrzeugbremse wirkt zunächst die Spindel-Mutter-Paarung mit der großen Gewindesteigung, sodass es möglich ist, ein Lüftspiel der Bremse entsprechend der großen Gewindesteigung relativ schnell zu durchlaufen. Sobald das Lüftspiel durchlaufen ist und das Stellglied derart weit verlagert wurde, dass sich ein mit dem Stellglied gekoppelter Bremsbelag an eine Bremsscheibe anlegt, steigt der Widerstand gegen eine weitere Verlagerung zum Zuspannen der Bremse. In der Folge ist es erforderlich, den Bremsbelag über das Stellglied hinreichend stark an die Bremsscheibe anzudrücken, um die gewünschte Zuspannwirkung (Bremskraft) zu erreichen. Diese Betätigungsphase wird als zweite Betätigungsphase bezeichnet, in der die Spindel-Mutter-Paarung mit der geringeren Gewindesteigung wirksam wird.

Die Erfindung macht sich also eine mehrstufige Spindel-Mutter-Anordnung zu Nutze, um in der ersten Betätigungsphase, in der der Verlagerung des Stellglieds eine geringe Axialkraft entgegenwirkt, eine schnelle Verlagerung des Stellglieds zu erzielen. In der zweiten Betätigungsphase, in der der Verlagerung des Stellglieds eine verhältnismäßig größere Axialkraft entgegenwirkt, wird die Zuspannwirkung mittels der Spindel-Mutter-Paarung mit der kleineren Gewindesteigung erreicht. Dieses Umschalten zwischen verschiedenen Gewinde-Steigungen in Abhängigkeit von der entgegenwirkenden Axialkraft ermöglicht es auch, einen schwächeren Antriebsmotor zu verwenden.

Eine Weiterbildung der Erfindung sieht vor, dass der Übergang von der ersten Betätigungsphase in die zweite Betätigungsphase durch einen auf das Stellglied wirkenden Axialkraft-Schwellenwert bestimmt ist. Dabei kann vorgesehen sein, dass der Axialkraft-Schwellenwert derart bemessen ist, dass während der ersten Betätigungsphase das Stellglied zum Durchlaufen eines Bremslüftspiels verlagerbar ist und während der zweiten Betätigungsphase das Stellglied zum Aufbauen einer gewünschten Bremskraft verlagerbar ist.

Hinsichtlich der konstruktiven Gestaltung der erfindungsgemäßen Kraftfahrzeugbremse kann vorgesehen sein, dass die erste Spindel-Mutter-Paarung eine erste Spindel und eine erste Mutter aufweist, wobei die erste Mutter drehfest relativ zu dem Stellglied angeordnet, vorzugsweise drehfest in dem Stellglied aufgenommen oder einstückig mit diesem ausgebildet ist, und wobei die erste Spindel durch den motorischen Antrieb drehantreibbar ist.

Die zweite Spindel-Mutter-Paarung weist eine zweite Spindel und eine zweite Mutter auf, wobei die zweite Mutter drehfest mit dem Stellglied koppelbar ist und wobei die zweite Spindel durch den motorischen Antrieb drehantreibbar ist.

Um die gewünschte Umschaltfunktion zwischen den einzelnen Stufen der Spindel-Mutter-Anordnung zu erreichen, sieht die Erfindung vor, dass die zweite Mutter der zweiten Spindel-Mutter-Paarung zweigeteilt ist, wobei ein erster Mutterabschnitt über einen Verbindungsstift drehfest, jedoch in axialer Richtung zueinander verlagerbar mit einem zweiten Mutterabschnitt gekoppelt ist, wobei der erste Mutterabschnitt und der zweite Mutterabschnitt über einen Druckfedermechanismus in axialer Richtung auseinander gespannt sind. Dabei ist der Verbindungsstift beispielsweise im ersten Mutterabschnitt festgelegt und mit einer Durchgangsöffnung im zweiten Mutterabschnitt verschiebbar geführt. Selbstverständlich ist es auch möglich, den Stift im zweiten Mutterabschnitt festzulegen (durch Einpressen oder dergleichen) und diesen verschiebbaren ersten Mutterabschnitt zu führen. Maßgeblich ist, dass die beiden Mutterabschnitte über den Verbindungsstift drehfest gekoppelt sind.

Der Druckfedermechanismus bewirkt, dass die beiden Mutterabschnitte auseinander gespannt, d. h. gespreizt, werden. Betrachtet man die den zweiten Muttern mit ihren beiden Mutterabschnitten zugeordnete Spindel und deren Gewinde in axialer Richtung, so wird das Innengewinde des ersten Mutterabschnitts durch den Druckfedermechanismus an in Betrachtungsrichtung vorlaufende Gewindeflanken der Spindel gedrückt, wohingegen das Innengewinde des zweiten Mutterabschnitts an anders gerichtete, d.h. nachlaufende, Gewindeflanken der Spindel gedrückt wird. Der Druckfedermechanismus ist entsprechend vorgespannt und sorgt so für eine verhältnismäßig große Haftreibung zwischen den beiden Mutterabschnitten und der diesen zugeordneten Spindel. Die beiden Mutterabschnitte sind durch den Druckfedermechanismus und die von diesem ausgeübten Axialkraft sozusagen auf der Spindel verspannt, ähnlich wie zwei zueinander gekonterte Muttern. Dadurch wird in Abhängigkeit von der Größe der von dem Druckfedermechanismus ausgeübten Axialkraft erreicht, dass in diesem verspannten Zustand eine Relativverdrehung der die beiden Mutterabschnitte umfassenden zweiten Mutter relativ zur Spindel erheblich erschwert ist. Hingegen ist eine Relativverdrehung zwischen der ersten Spindel und der dieser zugeordneten ersten Mutter wesentlich einfacher möglich, d. h. unter deutlich geringerem Widerstand.

Wird nun die mehrstufige Spindel-Mutter-Anordnung angetrieben, so bedeutet dies, dass in einem Zustand, in dem der Druckfedermechanismus seine Wirkung voll entfaltet, und die beiden Mutterabschnitte der zweiten Mutter relativ zur zweiten Spindel verspannt (kontert), im Wesentlichen nur die erste Spindel-Mutter-Paarung wirksam ist. Dies macht es möglich, die relativ große Gewindesteigung der ersten Spindel-Mutter-Paarung in der ersten Betätigungsphase auszunutzen. Nimmt nun im Rahmen der elektromechanischen Betätigung die auf das Stellglied wirkende Axialkraft zu, weil sich ein von diesem verlagerter Bremsbelag an eine Bremsscheibe anlegt, so wird über die erste Spindel-Mutter-Paarung eine mit zunehmender Zuspannwirkung anwachsende Axialkraft auf den zweiten Mutterabschnitt der zweiten Spindel-Mutter-Paarung ausgeübt. Diese Axialkraft wirkt der von dem Druckfedermechanismus zum Spreizen der beiden Mutterabschnitte ausgeübten Axialkraft entgegen und baut die Verspannung der beiden Mutterabschnitte, d. h. die Konterwirkung des Druckfedermechanismus, zunehmend ab. Dabei wird der zweite Mutterabschnitt im Rahmen des Gewindespiels in Richtung des ersten Mutterabschnitts verlagert, wobei diese Bewegung durch den Verbindungsstift axial geführt ist. Schließlich legen sich die beiden Mutterabschnitte mit ihrem Innengewinde jeweils nur an gleichgerichtete Flanken des Außengewindes der zweiten Spindel an, sodass die Konterwirkung vollständig aufgehoben ist. Die zweite Mutter wirkt dann, trotz ihrer Zweiteilung, wie eine übliche Mutter, wobei die Drehmomentübertragung zwischen den beiden Mutterabschnitten über den Verbindungsstift erfolgt. Die weitere Antriebsbewegung des Stellglieds wird in diesem Zustand, vorstehend auch als zweite Betätigungsphase bezeichnet, im Wesentlichen ausschließlich von der zweiten Spindel-Mutter-Paarung bewirkt. Die erste Spindel-Mutter-Paarung bleibt dabei im Wesentlichen passiv, was ihrer verhältnismäßig großen Gewindesteigung geschuldet ist.

Über die zweite Spindel-Mutter-Paarung mit der relativ geringen Gewindesteigung lassen sich verhältnismäßig hohe Spannkräfte im gewünschten Bereich erzielen. Die erste Spindel-Mutter-Paarung hingegen bewirkt eine schnelle Verstellung des Stellglieds und damit des Bremsbelags zum schnellen Durchlaufen des Lüftspiels.

Es versteht sich, dass die Vorrichtung beim Lösen der Bremswirkung im Rahmen einer elektromechanischen Betätigung in umgekehrter Reihenfolge aktiv ist. Dabei ist zunächst die zweite Spindel-Mutter-Paarung wirksam, bis sich die Verspannung über den Druckfedermechanismus zwischen den beiden Mutterabschnitten wieder aufbaut. In der Folge ist die erste Spindel-Mutter-Paarung wirksam, um schnell das Lüftspiel wiederherzustellen.

Vorzugsweise kann erfindungsgemäß vorgesehen sein, dass eine von dem Druckfedermechanismus ausgehende axiale Federkraft zum Auseinanderspannen des ersten und zweiten Mutterabschnitts zur Vorgabe des Axialkraft-Schwellenwerts bemessen ist. Je nach Auslegung des Druckfedermechanismus und der von diesem ausgeübten axialen Federkraft lässt sich der Zeitpunkt des Umschaltens zwischen erster und zweiter Betätigungsphase bestimmen. Hierzu kann der Druckfedermechanismus eine oder mehrere Druckfedern verschiedener Art aufweisen, beispielsweise herkömmliche Spiralfedern, Tellerfedern, elastomere Druckkörper oder dergleichen.

Eine Weiterbildung der Erfindung sieht vor, dass die erste Spindel der ersten Spindel-Mutter-Paarung drehfest mit dem zweiten Mutterabschnitt der zweiten Mutter der zweiten Spindel-Mutter-Paarung gekoppelt oder einstückig mit dieser ausgebildet ist. So ist es möglich, die erste Spindel und den zweiten Mutterabschnitt der zweiten Mutter als integrales Bauteil kostengünstig auszubilden.

Eine Weiterbildung der Erfindung sieht vor, dass die erste Spindel-Mutter-Paarung selbsthemmend ausgebildet ist, vorzugsweise mit einem Kegelgewinde, Trapezgewinde oder einem Kugelgewindetrieb mit Brems- bzw. Blockieranordnung. Ferner kann erfindungsgemäß vorgesehen sein, dass die zweite Spindel-Mutter-Paarung selbsthemmend ausgebildet ist, vorzugsweise mit einem Kegelgewinde oder einem Trapezgewinde. Die Selbsthemmung ist jeweils erforderlich, um ein unbeabsichtigtes Lösen der Kraftfahrzeugbremse zu verhindern.

Eine Weiterbildung der Erfindung sieht vor, dass der Verlagerungsmechanik eine, vorzugsweise mehrstufige, Getriebeanordnung zugeordnet ist, die zwischen dem motorischen Antrieb und der Spindel-Mutter-Anordnung angeordnet ist. Dies macht es möglich, einen relativ schwach ausgebildeten motorischen Antrieb vorzusehen und dennoch über eine geeignete Getriebeanordnung mit hinreichender Übersetzung hohe Zustellkräfte im Bereich der Spindel-Mutter-Anordnung zu erreichen.

Die Erfindung wird im Folgenden beispielshaft anhand der beiliegenden Figuren erläutert. Es stellen dar:
- Figur 1: eine schematische Übersichtsdarstellung der wesentlichen Komponenten der erfindungsgemäßen Kraftfahrzeugbremse;
- Figur 2a: die Darstellung gemäß Figur 1 in verkleinerter Ansicht, jedoch mit Ausschnittsmarkierung;
- Figur 2b: der in Figur 2a mit II gekennzeichnete Ausschnitt im Rahmen einer ersten Betätigungsphase;
- Figur 2c: der in Figur 2a mit II gekennzeichnete Ausschnitt im Rahmen einer zweiten Betätigungsphase; und
- Figur 3: ein Kraftdiagramm zur Erläuterung der Betriebsweise der erfindungsgemäßen Kraftfahrzeugbremse.

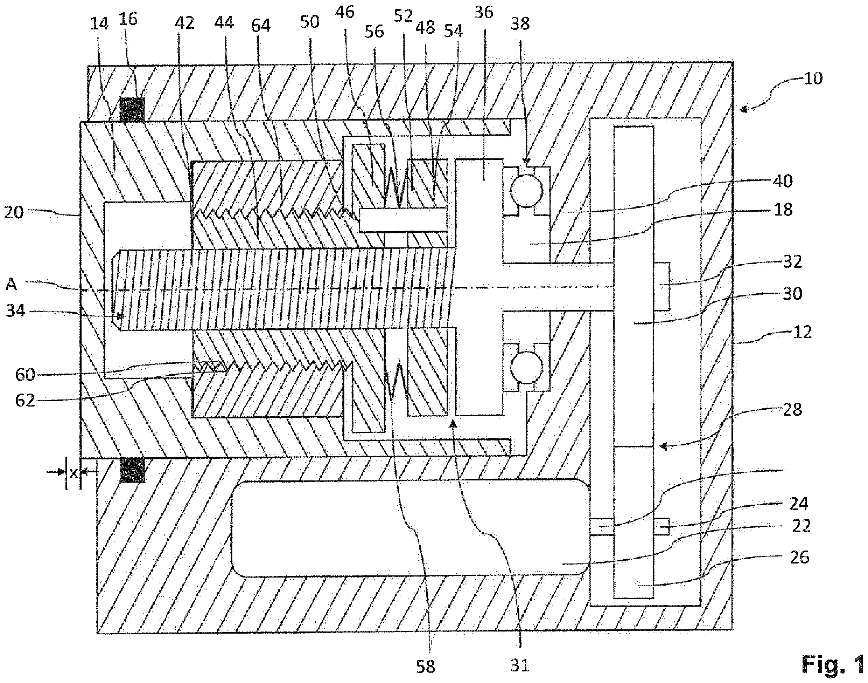

In Figur 1 ist eine erfindungsgemäße Kraftfahrzeugbremse allgemein mit 10 bezeichnet. Diese umfasst ein Gehäuse 12, in dem ein zu einer Längsachse A verlagerbares Stellglied in Form eines hydraulischen Kolbens 14 verlagerbar aufgenommen ist. Der Kolben 14 ist verdrehgesichert und über eine Fluiddichtung 16 innerhalb des Gehäuses 12 geführt. Der Kolben 14 lässt sich durch Beaufschlagung eines Druckraums 18 mit Bremsfluid entlang der Längsachse A in herkömmlicher Weise verlagern, um so einen mit einer Stirnfläche 20 des Kolbens 14 gekoppelten Bremsbelag (nicht gezeigt) an eine Bremsscheibe (ebenfalls nicht gezeigt) bremswirksam anzudrücken. Durch Freigabe des Hydraulikfluids aus dem Druckraum 18 kehrt der Kolben 14 in üblicher Weise wieder in seine Ausgangsstellung zurück.

Bei einer Betätigung des Kolbens 14 muss dieser zunächst über eine Strecke x bewegt werden, die einem in dem Bremssystem vorhandenen Lüftspiel entspricht. Erst sobald die Strecke x überwunden ist, wird der Bremsbelag an die Bremsscheibe angelegt und es kann in der Folge eine Bremswirkung erzielt werden. Bei Durchlaufen des Lüftspiels entsprechend dem Betrag x erfährt der Kolben 14 sehr geringen Widerstand. Die in dieser Betätigungsphase, im Folgenden erste Betätigungsphase genannt, entgegenwirkenden Axialkräfte sind im Wesentlichen Reibungskräfte, die von der Dichtung 16 auf die Kolbenumfangsfläche ausgeübt werden.

In dem Gehäuse 12 ist ferner ein Elektromotor 22 vorgesehen, der eine Ausgangswelle 24 aufweist. Die drehangetriebene Ausgangswelle 24 ist drehfest mit einem ersten Zahnrad 26 einer Getriebeanordnung 28 gekoppelt. Das Zahnrad 26 kämmt mit einem zweiten Zahnrad 30 der Getriebeanordnung 28. Das zweite Zahnrad 30 ist drehfest auf einem Wellenansatz 32 angebracht. Der Wellenansatz 32 ist Teil einer Gewindespindel 34, die über einen Spindelflansch 36 unter Vermittlung eines Axiallagers 38 drehbar in dem Gehäuse 12 gelagert ist. Das Axiallager 38 stützt sich mit einem Ende an dem Spindelflansch 36 ab, mit dem anderen Ende ist dieses in einem Gehäusesteg 40 aufgenommen, durch den sich der Wellenansatz 32 erstreckt.

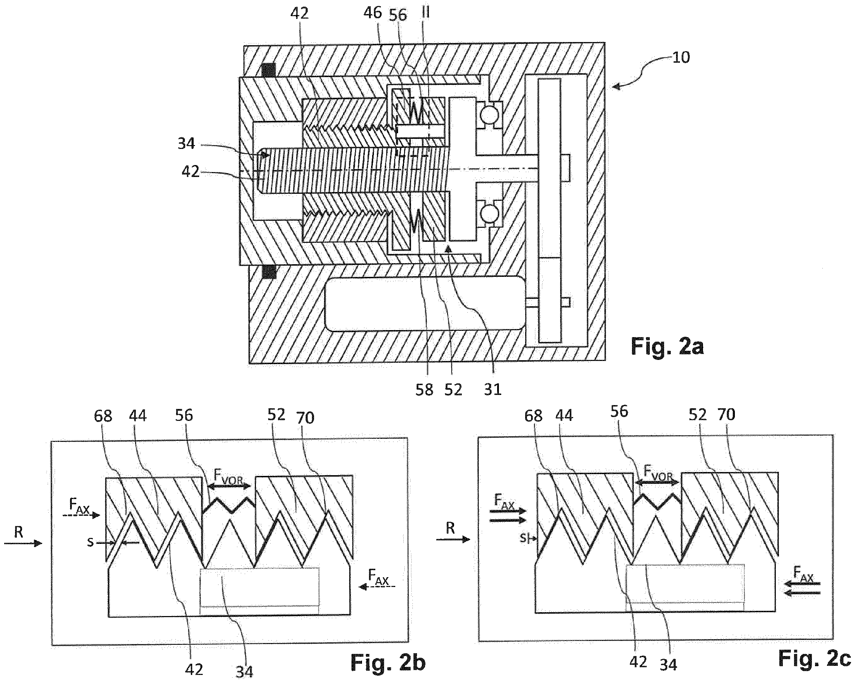

Eine Spindel-Mutter-Anordnung 31 umfasst die Gewindespindel 34, welche an ihrem Außenumfang ein Außengewinde 42 aufweist. Dieses steht im Eingriff mit einem Innengewinde eines Mutterabschnitts 44 der Spindel-Mutter-Anordnung 31. Der Mutterabschnitt 44 ist buchsenartig ausgebildet und weist an seinem in Figur 1 rechten Endbereich einen sich nach radial auswärts erstreckenden Flansch 46 auf. In diesem Flansch 46 ist ein Verbindungsstift 48 in eine Aufnahmeöffnung 50 eingepresst. Der Verbindungsstift 48 erstreckt sich in Figur 1 in axialer Richtung zu einem weiteren Mutterabschnitt 52 der Spindel-Mutter-Anordnung 31. Der Mutterabschnitt 52 weist eine Aufnahmeöffnung 54 auf, die den Verbindungsstift 48 in Stiftlängsrichtung gleitverschieblich mit geringem Spiel aufnimmt. Auch der Mutterabschnitt 52 weist ein Innengewinde auf, das in Eingriff mit dem Außengewinde 42 der Spindel 34 steht. Zwischen den beiden Mutterabschnitten 44 und 52 sind zwei Druckfedern 56, 58 angeordnet, die in dem in Figur 1 gezeigten Zustand unter Vorspannung stehen. Hierauf soll im Folgenden noch mit Bezug auf die Figuren 2a bis 2c im Detail eingegangen werden.

Der Mutterabschnitt 44 weist an seiner Außenumfangsfläche eine weitere Gewindeformation 60 auf. Diese steht im Eingriff mit einer Innengewindeformation 62 einer Mutter 64. Die Mutter 64 ist als Teil der Spindel-Mutter-Anordnung 31 drehfest im Inneren des Kolbens 14 aufgenommen. Sie kann auch integral als Bereich des Kolbens ausgebildet sein.

Wie vorstehend angedeutet, lässt sich der Kolben 14 rein hydraulisch durch Druckbeaufschlagen der Druckkammer 18 verlagern. Ferner ist es möglich, den Kolben 14 auch elektromechanisch durch entsprechendes Ansteuern des motorischen Antriebs 22 zu verlagern. Hierzu wird über den Elektromotor 22 dessen Motorausgangswelle 24 drehangetrieben. Es erfolgt eine Drehmomentübertragung über die Getriebeanordnung 28 auf die Spindel-Mutter-Anordnung 31. Über die Spindel-Mutter-Anordnung 31, deren Funktionsweise nachfolgend detaillierter erläutert wird, lässt sich der Kolben 14 verlagern. Eine derartige elektromechanische Betätigung kommt grundsätzlich auch im Rahmen einer herkömmlichen Betriebsbremsung (während der Fahrt) in Frage. Derzeit findet eine derartige elektromechanische Betätigung aber vorzugsweise Anwendung bei der Realisierung einer Feststellbremsfunktion (elektromechanische Parkbremse).

Figur 2a zeigt die schematische Darstellung gemäß Figur 1 verkleinert. Allerdings erkennt man in Figur 2a einen Ausschnitt II, der maßgeblich für die Funktionsweise der zweistufigen Spindel-Mutter-Anordnung 31 ist. Wie vorstehend bereits erläutert, stehen mit der Spindel 34 die beiden Mutterabschnitte 44 und 52 im Gewindeeingriff. Diese beiden Mutterabschnitte 44 und 52 sind über die beiden Druckfedern 56 und 58 zueinander verspannt und über den Verbindungsstift 48 miteinander drehmomentübertragend verbunden. Die von den Druckfedern 56 und 58 ausgeübte Axialkraft wird in den Figuren 2b und 2c als Vorspannkraft F_{VOR} bezeichnet.

In einem Zustand, in dem der Kolben 14 im Wesentlichen widerstandslos bewegt wird, d. h. in dem der Kolben 14 den Bremsbelag verlagert, ohne dass dieser Verlagerung von der Bremsscheibe Widerstand entgegengesetzt wird (Durchlaufen des Lüftspiels x, im Folgenden erste Betätigungsphase), bewirkt die von den Federn 56 und 58 ausgehende Vorspannkraft F_{VOR}, dass die beiden Mutterabschnitte 44 und 52 auseinander gespannt, d. h. gespreizt werden. Betrachtet man den vergrößerten Abschnitt gemäß Figur 2b, so erkennt man, dass zwischen dem Außengewinde 42 der Spindel 34 und einem Innengewinde 68 des Mutterabschnitts 44 einerseits sowie einem Innengewinde 70 des Mutterabschnitts 52 andererseits jeweils einen Gewindespiel s vorhanden ist. Dieses Gewindespiel erlaubt eine geringfügige Bewegung der jeweiligen Mutterabschnitte 44, 52 in axialer Richtung relativ zu der Spindel 34. Die Federvorspannung der Axialdruckfedern 56, 58, die zu der Vorspannkraft F_{VOR} führt, bewirkt, dass die beiden Mutterabschnitte 44 und 52 im Rahmen des Gewindespiels s auseinander gespannt werden, sodass die in einer axialen Betrachtungsrichtung R dem Betrachter zugewandten Gewindeflanken des Innengewindes 68 des Mutterabschnitts 44 an die dem Betrachter in Betrachtungsrichtung R abgewandten Gewindeflanken des Außengewindes 42 der Spindel 34 gedrückt werden. Im Gegensatz dazu werden die dem Betrachter abgewandten Gewindeflanken des Innengewindes 70 des Mutterabschnitts 52 an die dem Betrachter zugewandten Gewindeflanken des Außengewindes 42 der Spindel 34 gedrückt. Dies entspricht einem Zustand zweier Muttern, die zueinander gekontert sind und sozusagen auf einem Gewinde zueinander verspannt sind. Es ist allgemein bekannt, dass ein derart gekonterter Zustand zur Folge hat, dass sich die beiden Muttern, hier die beiden Mutterabschnitte 44 und 52 auf dem Außengewinde 42 der Spindel 34, allenfalls unter erheblichem Kraftaufwand bewegen lassen.

Dieser über die Vorspannkraft gekonterte Zustand der beiden Mutterabschnitte 44 und 52 hält an, solange auf den Kolben 14 keine oder nur geringe Axialkräfte wirken. Sobald aber auf den Mutterabschnitt 44 ausgehend vom Kolben 14 Axialkräfte einwirken, wie in Figur 2b mit strichliertem Pfeil angedeutet, wobei die axiale Gegenkraft F_{AX} eine Abstützkraft ist, die über das Axiallager 38 in das Gehäuse abgeleitet wird, werden die Druckfedern 56, 58 entgegen ihrer Vorspannkraft F_{VOR} komprimiert. Bei hinreichend großen Axialkräften F_{AX}, wie in Figur 2c angedeutet, wird der Mutterabschnitt 44 im Rahmen des Gewindespiels s verlagert, sodass sich bei gleicher Betrachtungsrichtung R schließlich die dem Betrachter abgewandten Flanken des Mutterabschnitts 44 in gleicher Weise wie beim Mutterabschnitt 52 an die dem Betrachter zugewandten Flanken des Außengewindes 42 der Spindel 34 anlegen. Die beiden Mutterabschnitte 44 und 52 sind somit nicht mehr zueinander gekontert und lassen sich gemeinsam unter Vermittlung des Verbindungsstifts 48 unter relativ geringem Widerstand auf der Spindel 34 verdrehen.

Mit der in Bezug auf Figuren 2a bis 2c beschriebenen Funktionsweise der beiden zueinander verspannten Mutterabschnitte 44 und 52 lässt sich eine Schaltbarkeit bzw. Mehrstufigkeit der Spindel-Mutter-Anordnung erreichen. Solange die beiden Mutterabschnitte 44 und 52 zueinander verspannt sind, d. h. auf der Spindel 34 gekontert sind, ist eine erste Spindel-Mutter-Paarung gebildet aus dem Außengewinde 60 des Mutterabschnitts 44 und dem Innengewinde 62 der Mutter 64 wirksam. Diese Gewindepaarung hat eine verhältnismäßig große Gewindesteigung und bewirkt einen verhältnismäßig großen Stellweg bei vorgegebener Winkelverdrehung der Spindel 34. Wird die Spindel 34 drehangetrieben, so wird diese Drehbewegung im Wesentlichen vollständig auf den Mutterabschnitt 44 übertragen. Demzufolge wird über den Gewindeeingriff die Mutter 64 zusammen mit dem Kolben 14 verlagert.

Ist das Lüftspiel x überwunden, sodass der Bremsbelag (nicht gezeigt) an die Bremsscheibe (nicht gezeigt) angelegt wird, werden die auf den Kolben 14 wirkenden Axialkräfte F_{AX} erheblich ansteigen. Diese Axialkräfte F_{AX} werden über die Mutter 64 auf den Mutterabschnitt 44 übertragen und führen zu einem Übergang aus dem Zustand gemäß Figur 2b in den Zustand gemäß Figur 2c. Die verhältnismäßig steile Gewindepaarung 60, 62 geht in ihren Selbsthemmungszustand über und bewirkt keine weitere Verlagerung des Kolbens 14. Hingegen kann nun gemäß dem nicht mehr gekonterten Zustand nach Figur 2c eine weitere Stellbewegung über das flachere Außengewinde 42 der Spindel 34 erfolgen. Die folgende Zustellbewegung des Kolbens 14 ist bei vorgegebener Winkelverdrehung der Spindel 34 entsprechend geringer, jedoch mit größerem Drehmoment, sodass eine entsprechende Zuspannwirkung am nicht gezeigten Bremsbelag erzielt werden kann.

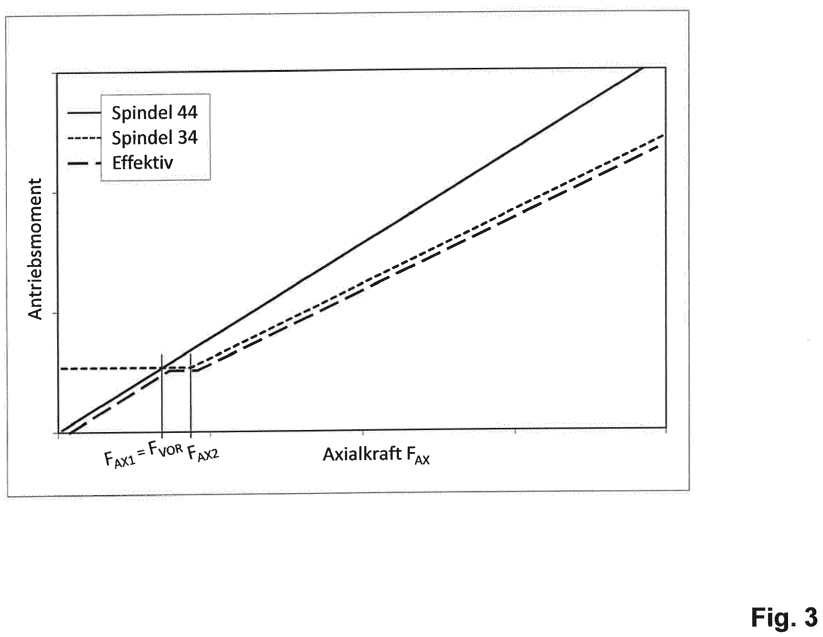

Diese Funktionsweise ist in der Grafik gemäß Figur 3 erläutert. Dort ist das vom Motor erforderliche Antriebsmoment über der auf den Kolben wirkenden Axialkraft F_{AX} dargestellt. Die durchgezogene Linie zeigt die Charakteristik allein für die Spindel-Mutter-Paarung bestehend aus Mutter 64 sowie dem mit seinem Außengewinde 60 als Spindel wirkenden Mutterabschnitt 44, kurz als Spindel 44 bezeichnet. Die mit kurzen Linienabschnitten gezeigte Strichlinie zeigt die Charakteristik für die Spindel-Mutter-Paarung bestehend aus Spindel 34 und den beiden Mutterabschnitten 44 und 52, kurz als Spindel 34 bezeichnet. Die mit langen Linienabschnitten bezeichnete Strichlinie zeigt die effektive (kombinierte) Charakteristik der gesamten Spindel-Mutter-Anordnung 31.

Gemäß vorstehender Beschreibung ist zunächst die Spindel 44 wirksam. Die Spindel 34 bleibt sozusagen unwirksam aufgrund der auf ihr verspannten Mutterabschnitte 44, 52. Dies entspricht der ersten Betätigungsphase (im Wesentlichen Durchlaufen des Lüftspiels x). Sobald die wirkende Axialkraft F_{AX} gleich der über die Druckfedern 56, 58 wirkenden Vorspannkraft F_{VOR} wird, wird ein Umschaltpunkt erreicht. In der Folge wird kurzzeitig Antriebsdrehmoment genutzt, um die Federverspannung aufzuheben, bis schließlich in einem weiteren Knickpunkt F_{AX2} nur noch die Spindel 34 wirksam ist. Es folgt das bremswirksame Zuspannen der Bremse (zweite Betätigungsphase). Die Grafik zeigt demnach, dass zunächst die Spindel 44 mit ihrer großen Gewindesteigung zur Überbrückung des Lüftspiels genutzt werden kann und in der Folge axialkraftabhängig ein Umschalten auf die Spindel 34 mit geringerer Gewindesteigung erfolgt, um entsprechend höhere Axialkräfte mit geringerem Antriebsmoment zu erreichen.

Die Erfindung macht es möglich, mit einem leistungsschwächeren elektromotorischen Antrieb, der entsprechend kleiner dimensioniert werden kann, sowohl eine schnelle Zustellbewegung zur Überbrückung des Lüftspiels als auch ein hinreichend starkes Zuspannen der Bremse mit großen Axialkräften zu bewirken.

## Patentansprüche

1. Kraftfahrzeugbremse, insbesondere kombiniert hydraulisch und elektromechanisch betätigbare Kraftfahrzeugbremse, mit einer Aktuatorbaugruppe (10) umfassend:
- ein Gehäuse (12),
- ein relativ zu dem Gehäuse (12) entlang einer Längsachse (A) verlagerbares Stellglied (14) zum hydraulischen oder elektromechanischen Verlagern eines Bremsbelags,
- einen motorischen Antrieb (22), und
- eine zwischen dem motorischen Antrieb (22) und dem verlagerbaren Stellglied (14) angeordnete Verlagerungsmechanik zum Verlagern des Stellglieds (14),
wobei die Verlagerungsmechanik eine mehrstufige Spindel-Mutter-Anordnung (31) mit einer ersten Spindel-Mutter-Paarung mit einer ersten Gewindesteigung und einer zweiten Spindel-Mutter-Paarung mit einer zweiten Gewindesteigung aufweist, wobei die erste Gewindesteigung größer ist als die zweite Gewindesteigung, wobei bei einer elektromechanischen Betätigung der Kraftfahrzeugbremse in einer ersten Betätigungsphase die erste Spindel-Mutter-Paarung wirksam ist und in einer zweiten Betätigungsphase die zweite Spindel-Mutter-Paarung wirksam ist, und
wobei die zweite Spindel-Mutter-Paarung eine zweite Spindel (34) und eine zweite Mutter aufweist, wobei die zweite Mutter drehfest mit dem Stellglied (14) koppelbar ist und wobei die zweite Spindel (34) durch den motorischen Antrieb (22) drehantreibbar ist,
**dadurch gekennzeichnet, dass** die zweite Mutter der zweiten Spindel-Mutter-Paarung zweigeteilt ist, wobei ein erster Mutterabschnitt (52) über einen Verbindungsstift (48) drehfest, jedoch in axialer Richtung zueinander verlagerbar mit einem zweiten Mutterabschnitt (44) gekoppelt ist, und wobei der erste Mutterabschnitt (52) und der zweite Mutterabschnitt (44) über einen Druckfedermechanismus (56, 58) in axialer Richtung auseinander gespannt sind.

2. Kraftfahrzeugbremse nach Anspruch 1,
**dadurch gekennzeichnet, dass** der Übergang von der ersten Betätigungsphase zu der zweiten Betätigungsphase durch einen auf das Stellglied (14) wirkenden Axialkraft-Schwellenwert bestimmt ist.

3. Kraftfahrzeugbremse nach Anspruch 2,
**dadurch gekennzeichnet, dass** der Axialkraft-Schwellenwert derart bemessen ist, dass während der ersten Betätigungsphase das Stellglied (14) zum Durchlaufen eines Bremslüftspiels (x) verlagerbar ist und während der zweiten Betätigungsphase das Stellglied (14) zum Aufbauen einer gewünschten Bremskraft verlagerbar ist.

4. Kraftfahrzeugbremse nach einem der vorangehenden Ansprüche,
**dadurch gekennzeichnet, dass** die erste Spindel-Mutter-Paarung eine erste Spindel und eine erste Mutter (64) aufweist, wobei die erste Mutter (64) drehfest relativ zu dem Stellglied (14) angeordnet, vorzugsweise drehfest in dem Stellglied (14) aufgenommen oder einstückig mit diesem ausgebildet ist, und wobei die erste Spindel durch den motorischen Antrieb (22) drehantreibbar ist.

5. Kraftfahrzeugbremse nach Anspruch 2,
**dadurch gekennzeichnet, dass** eine von dem Druckfedermechanismus (56, 58) ausgehende axiale Federkraft zum Auseinanderspannen des ersten und zweiten Mutterabschnitts (44, 52) zur Vorgabe des Axialkraft-Schwellenwerts bemessen ist.

6. Kraftfahrzeugbremse nach einem der vorangehenden Ansprüche,
**dadurch gekennzeichnet, dass** die erste Spindel der ersten Spindel-Mutter-Paarung drehfest mit dem zweiten Mutterabschnitt (44) der zweiten Mutter der zweiten Spindel-Mutter-Paarung gekoppelt oder einstückig mit dieser ausgebildet ist.

7. Kraftfahrzeugbremse nach einem der vorangehenden Ansprüche,
**dadurch gekennzeichnet, dass** die erste Spindel-Mutter-Paarung selbsthemmend ausgebildet ist, vorzugsweise mit einem Kegelgewinde, Trapezgewinde oder einem Kugelgewindetrieb mit Brems- bzw. Blockieranordnung.

8. Kraftfahrzeugbremse nach einem der vorangehenden Ansprüche,
**dadurch gekennzeichnet, dass** die zweite Spindel-Mutter-Paarung selbsthemmend ausgebildet ist, vorzugsweise mit einem Kegelgewinde oder einem Trapezgewinde.

9. Kraftfahrzeugbremse nach einem der vorangehenden Ansprüche
**dadurch gekennzeichnet, dass** der Verlagerungsmechanik eine, vorzugsweise mehrstufige, Getriebeanordnung (28) zugeordnet ist, die zwischen dem motorischen Antrieb (22) und der Spindel-Mutter-Anordnung (31) angeordnet ist.

## Claims

1. A motor vehicle brake, in particular a motor vehicle brake that can be actuated in a combined hydraulic and electromechanical manner, having an actuator assembly (10) comprising:
- a housing (12),
- an actuating element (14) that is displaceable relative to the housing (12) along a longitudinal axis (A) for the hydraulic or electromechanical displacement of a brake lining,
- a motor drive (22), and
- a displacement mechanism, situated between the motor drive (22) and the displaceable actuating element (14), for displacing the actuating element (14),
wherein the displacement mechanism has a multi-stage spindle-nut arrangement (31) comprising a first spindle-nut pair having a first thread pitch and a second spindle-nut pair having a second thread pitch, wherein the first thread pitch is larger than the second thread pitch, wherein, during an electromechanical actuation of the motor vehicle brake, the first spindle-nut pair is active in a first actuating phase and the second spindle-nut pair is active in a second actuating phase, and
wherein the second spindle-nut pair has a second spindle (34) and a second nut, the second nut being coupleable to the actuating element (14) in a rotatably fixed manner, and the second spindle (34) being rotatably drivable by the motor drive (22), **characterized in that** the second nut of the second spindle-nut pair has two parts, a first nut section (52) being coupled in a rotatably fixed manner to a second nut section (44) via a connecting pin (48), but being displaceable relative to the second nut section in the axial direction, the first nut section (52) and the second nut section (44) being stretched apart from one another in the axial direction via a compression spring mechanism (56, 58).

2. The motor vehicle brake according to Claim 1,
**characterized in that** the transition from the first actuating phase to the second actuating phase is determined by an axial force threshold value acting on the actuating element (14).

3. The motor vehicle brake according to Claim 2,
**characterized in that** the axial force threshold value is dimensioned such that during the first actuating phase, the actuating element (14) is displaceable for passing through a brake clearance (x), and during the second actuating phase, the actuating element (14) is displaceable for building up a desired brake force.

4. The motor vehicle brake according to one of the preceding claims,
**characterized in that** the first spindle-nut pair has a first spindle and a first nut (64), the first nut (64) being rotatably fixed relative to the actuating element (14), preferably accommodated in the actuating element (14) in a rotatably fixed manner or formed in one piece with same, and the first spindle being rotatably drivable by the motor drive (22).

5. The motor vehicle brake according to Claims 2,
**characterized in that** an axial elastic force exerted by the compression spring mechanism (56, 58) is dimensioned for stretching apart the first and second nut sections (44, 52) for setting the axial force threshold value.

6. The motor vehicle brake according to one of the preceding claims,
**characterized in that** the first spindle of the first spindle-nut pair is coupled in a rotatably fixed manner to the second nut section (44) of the second nut of the second spindle-nut pair, or is formed in one piece with same.

7. The motor vehicle brake according to one of the preceding claims,
**characterized in that** the first spindle-nut pair has a self-locking design, preferably with a tapered thread or trapezoidal thread, or a ball screw drive with the braking or locking system.

8. The motor vehicle brake according to one of the preceding claims,
**characterized in that** the second spindle-nut pair has a self-locking design, preferably with a tapered thread or a trapezoidal thread.

9. The motor vehicle brake according to one of the preceding claims, **characterized in that** a preferably multi-stage gear system (28), situated between the motor drive (22) and the spindle-nut arrangement (31), is associated with the displacement mechanism.

## Revendications

1. Frein de véhicule automobile, en particulier frein de véhicule automobile à actionnement hydraulique et électromécanique combiné, avec un ensemble d'actionnement (10) comprenant :
- un boîtier (12),
- un actionneur (14) déplaçable par rapport au boîtier (12) le long d'un axe longitudinal (A) pour déplacer hydrauliquement ou électromécaniquement une garniture de frein,
- un entraînement à moteur (22), et
- un mécanisme de déplacement disposé entre l'entraînement à moteur (22) et l'actionneur déplaçable (14) pour déplacer l'actionneur (14),
dans lequel le mécanisme de déplacement comprend un agencement broche-écrou à plusieurs étages (31) ayant un premier appariement broche-écrou avec un premier pas de filetage et un second appariement broche-écrou avec un second pas de filetage, le premier pas de filetage étant plus grand que le second pas de filetage, dans lequel, lors d'un actionnement électromécanique du frein de véhicule automobile, le premier appariement broche-écrou est actif dans une première phase d'actionnement et le second appariement broche-écrou est actif dans une seconde phase d'actionnement, et
dans lequel le second appariement broche-écrou comprend une seconde broche (34) et un second écrou, le second écrou pouvant être accouplé de manière solidaire en rotation à l'actionneur (14) et la seconde broche (34) pouvant être entraînée en rotation par l'entraînement à moteur (22),
**caractérisé en ce que** le second écrou du second appariement broche-écrou est divisé en deux, une première partie d'écrou (52) étant accouplée, par l'intermédiaire d'une tige de liaison (48), à une seconde partie d'écrou (44) de manière solidaire en rotation mais déplaçable axialement par rapport à celle-ci, et la première partie d'écrou (52) et la seconde partie d'écrou (44) étant mises en tension dans la direction axiale par un mécanisme à ressort de compression (56, 58).

2. Frein de véhicule automobile selon la revendication 1,
**caractérisé en ce que** le passage de la première phase d'actionnement à la seconde phase d'actionnement est déterminé par une valeur seuil de force axiale agissant sur l'actionneur (14).

3. Frein de véhicule automobile selon la revendication 2,
**caractérisé en ce que** la valeur seuil de force axiale est dimensionnée de telle sorte que l'actionneur (14) peut être déplacé, pendant la première phase d'actionnement, pour parcourir un jeu d'aération de frein (x) et l'actionneur (14) peut être déplacé, pendant la seconde phase d'actionnement, pour créer une force de freinage souhaitée.

4. Frein de véhicule automobile selon l'une des revendications précédentes,
**caractérisé en ce que** le premier appariement broche-écrou comprend une première broche et un premier écrou (64), le premier écrou (64) étant disposé de manière solidaire en rotation par rapport à l'actionneur (14), de préférence reçu de manière solidaire en rotation dans l'actionneur (14) ou étant réalisé d'une seule pièce avec celui-ci, et la première broche pouvant être entraînée en rotation par l'entraînement à moteur (22).

5. Frein de véhicule automobile selon la revendication 2,
**caractérisé en ce qu'**une force de ressort axiale provenant du mécanisme à ressort de compression (56, 58) est dimensionnée pour maintenir écartées les première et seconde parties d'écrou (44, 52) afin de prédéfinir la valeur seuil de force axiale.

6. Frein de véhicule automobile selon l'une des revendications précédentes,
**caractérisé en ce que** la première broche du premier appariement broche-écrou est accouplée de manière solidaire en rotation à la seconde partie d'écrou (44) du second écrou du second appariement broche-écrou ou est réalisée d'une seule pièce avec celle-ci.

7. Frein de véhicule automobile selon l'une des revendications précédentes,
**caractérisé en ce que** le premier appariement broche-écrou est conçu autobloquant, de préférence avec un filetage conique, un filetage trapézoïdal ou une vis à billes avec agencement de freinage ou de blocage.

8. Frein de véhicule automobile selon l'une des revendications précédentes,
**caractérisé en ce que** le second appariement broche-écrou est conçu autobloquant, de préférence avec un filetage conique ou un filetage trapézoïdal.

9. Frein de véhicule automobile selon l'une des revendications précédentes,
**caractérisé en ce qu'**un agencement de transmission (28), de préférence à plusieurs étages, est associé au mécanisme de déplacement, ledit agencement de transmission étant disposé entre l'entraînement à moteur (22) et l'agencement broche-écrou (31).
